# EUROPEAN PATENT SPECIFICATION

(11) **EP 1 134 970 B1**
(45) Date of publication and mention of the grant of the patent: **02.12.2009**
(21) Application number: 00302153.2
(22) Date of filing: 16.03.2000
(51) Int. Cl.: H04N 5/225, H04N 3/15

(54) **Apparatus and method for improving the resolution of an image taken by a CCD using a refraction plate**
Vorrichtung und Verfahren zur Auflösungsverbesserung eines durch ein CCD aufgenommenen Bildes unter Benutzung eines brechendes Plättchens
Dispositif et méthode d'amélioration de résolution d'une image prise par un capteur CCD utilisant une plaque de réfraction

(43) Date of publication of application: 19.09.2001
(73) Proprietor: SAMSUNG ELECTRONICS CO., LTD., Suwon-City, Kyungki-do (KR)
(72) Inventor: Lim, Dae-soon, Suji-eup, Yongin-city, Kyungki-do (KR); Lee, Sung-hee, 838-1503, Byuckjeokgol Jukong Apt., Suwon-city, Kyungki-do (KR); Kim, Jong-cheon, Paldal-gu, Suwon-city, Kyungki-do (KR)
(74) Representative: Kohler, Janet Wendy

(56) References cited:
- EP-A- 0 689 349
- EP-A- 0 928 104
- US-A- 5 315 411
- US-A- 5 754 226

## Description

The present invention relates to a camera, and more particularly, to a plate for supporting a light path refraction plate of an image processing device capable of improving the resolution of a charge coupled device by successively projecting lights to a plurality of places on a pixel of the charge coupled device, and an image processing device employing the same.

Generally, in a camera such as a still camera or a camcorder adopting a solid state charge coupled device, the quality of the photographed image depends on the resolution of the solid state charge coupled device. Accordingly, it is preferable to adopt a solid state charge coupled device of high resolution in order to get a high quality image.

However, in order to improve the resolution of the solid state charge coupled device, many more light receiving elements have to be integrated in a limited area thereof, so the technique for integration should be high. Furthermore, the higher the degree of integration, the smaller the light receiving area becomes, so a light receiving element of higher sensitivity should be used.

Therefore, it is very costly and difficult to design and manufacture a high resolution charge coupled device, causing the camera in which it is installed to be expensive.

Various suggestions have been offered to solve the above-mentioned problem, and a few of them are disclosed in Japanese Patent Publication No. 9-172568 (Applicant: CANON), and Japanese Patent Publication No. 63-240185 (Applicant: TOSHIBA).

In order to vary the refractivity of an incident ray of light projected to the charge coupled device, JP Publication No. 9-172568 employs four plate glasses of different refractivities and JP Publication No. 63-240185 employs two prisms displaced by four piezoelectric elements, respectively. Accordingly, the incident ray of light to the charge coupled device is projected to a plurality of places of the pixel, improving the resolution of the charge coupled device.

According to the JP Publication Nos. 9-172568 and 63-240185, however, since the plate glasses or the prisms are supported to be rotated in one direction, a plurality of plate glasses or prisms are required in order to vary the refractivity of the light. Accordingly, the volume thereof increases while the structure is complicated. As a result, the camera employing the same becomes voluminous, and the assembly process becomes difficult. Further, manipulation of the camera is also complicated.

EP-A-0689349 discloses a refracting plate installed in the centre of an actuator provided with a gimbaling mechanism element which includes rotation supporting portions. A pair of voice coil motors are provided for each of the X- and the Y-axis in order to incline the refracting plate about the respective rotation supporting portions and their own bobbins press the middle parts of the respective sides of the gimbaling mechanism element. This document discloses the following features of claim 1:

A light path refraction plate supporting plate comprising:
a frame for supporting a light path refraction plate for refracting and projecting an incident ray from an object to a charge coupled device;
a first holder for rotatably supporting the frame in a first direction;
a first connecting section for connecting the first and second holders;
a second connecting section for connecting the frame and the first holder;
   wherein the frame, the first holder, the first connecting section, and the second connecting section are made of elastic material and are integrally formed.

EP-A-0928104 discloses an image processing device having a light path refraction plate. The refraction plate is movable within a predetermined angular range. A ray composing an image of the object is projected successively on a predetermined number of positions with respect to a corresponding pixel of the image pickup device, and an image is obtained by synthesizing a plurality of images obtained by such a process.

An aim of the present invention is to address the problems of the prior art discussed above, or otherwise. An aim of at least preferred embodiments of the present invention is to provide a plate for supporting a light path refraction plate having a simple structure and allowing a camera of a compact size. Another preferred aim is to provide an image processing device having a simple structure which is easy to assemble.

According to a first aspect of the present invention there is provided a supporting plate, comprising a frame for supporting a light path refraction plate for refracting and projecting an incident ray from an object to a charge coupled device; a first holder for rotatably supporting the frame in a first direction; a second holder for rotatably supporting the first holder in a second direction which is in perpendicular relation with respect to the second direction; a first connecting section for connecting the first and second holders; and a second connecting section for connecting the frame and the first holder; wherein the frame, the first holder, the second holder, the first connecting section, and the second connecting section are made of elastic material and are integrally formed.

Preferably, the first and second connecting sections are in parallel relation with respect to respective rotational axis thereof, or may be in the perpendicular relation with respect to respective rotational axes thereof, and are preferably in the shape of the letter I or U.

According to a second aspect of the present invention there is provided an image processing device comprising a light path refraction plate disposed in front of a charge coupled device, for refracting and projecting an incident ray from an object to the charge coupled device; an elastic light path refraction plate supporting plate as claimed in any preceding claim; a first actuator for rotating the first holder (24) in the second direction, thereby successively projecting respective lights of an image of the object to a predetermined number of places in respective pixels of the charge coupled device; and a second actuator for rotating the frame in the first direction, thereby successively projecting respective lights of the image of the object to a predetermined number of places in respective pixels of the charge coupled device.

The first and second actuators are bimorphemic piezos, and are in contact with the first holder by first and second operational pieces.

Advantageously, since one light path refraction plate is supported by the supporting plate and a pair of bimorphemic piezos to be rotated in two directions, the volume is decreased, and the structure is simplified, and the assembly and manipulation thereof become also simplified.

For a better understanding of the invention, and to show how embodiments of the same may be carried into effect, reference will now be made, by way of example, to the accompanying diagrammatic drawings in which:
Figure 1A is a plan view of an image processing device according to a preferred embodiment of the present invention;
Figure 1B is a side view of the image processing device of Figure 1A;
Figure 2 is a plane view for showing another example of the supporting plate of the image processing device according to the preferred embodiment of the present invention;
Figure 3 is a plan view for showing still another example of the supporting plate of the image processing device according to the preferred embodiment of the present invention;
Figure 4 shows a driving circuit for driving a piezoelectric actuator of the image processing device according to the preferred embodiment of the present invention;
Figure 5 is a sectional view for showing the image processing device being mounted in a camera according to the preferred embodiment of the present invention;
Figure 6 is an enlarged view for showing the main feature of the present invention, i.e., for showing the operation of the image processing device according to the preferred embodiment of the present invention;
Figure 7A shows an image of an object projected to a charge coupled device when the light path refraction plate of the image processing device according to the preferred embodiment of the present invention is in the initial state;
Figure 7B shows the image of the object being moved by a half pitch in a first direction by the light path refraction plate of the image processing device according to the preferred embodiment of the present invention;
Figure 7C shows the image of the object being moved by a half pitch both in first and second directions by the light path refraction plate of the image processing device according to the preferred embodiment of the present invention;
Figure 7D shows the image of the object being moved by a half pitch in a second direction by the light path refraction plate of the image processing device according to the preferred embodiment of the present invention; and
Figure 8 is a view for showing the images of Figures 7A to 7D being composited.

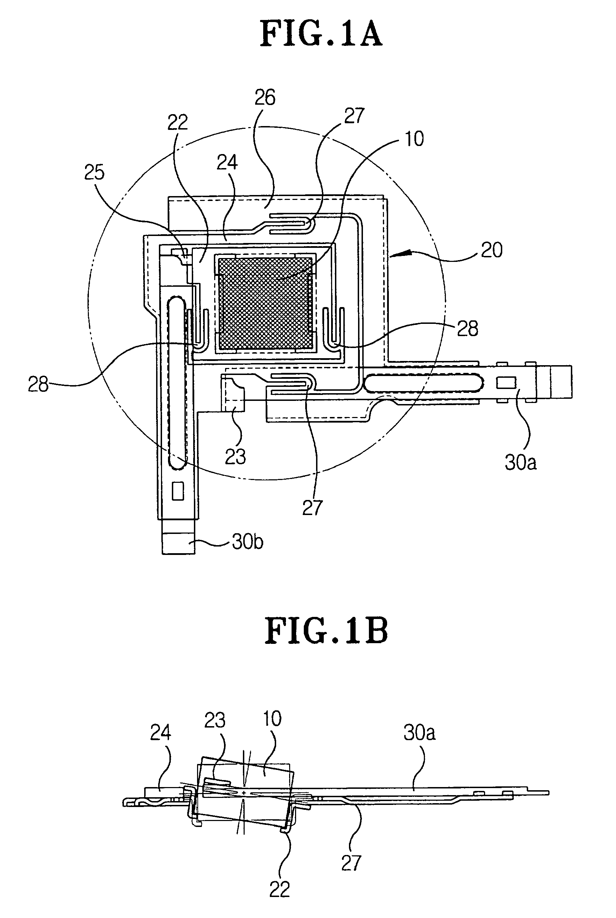

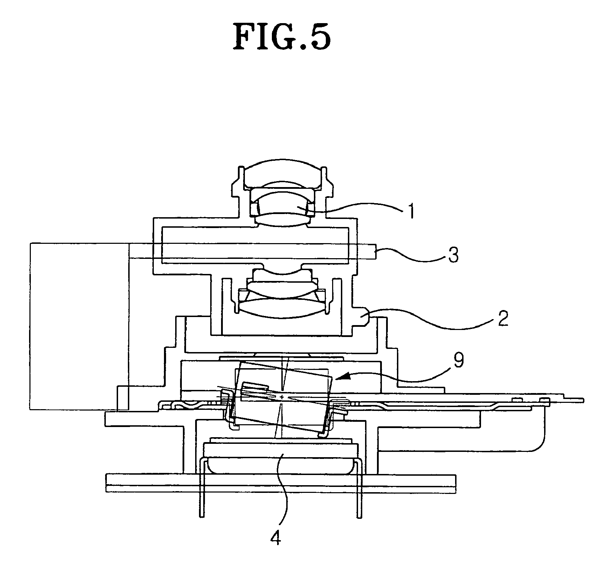

Hereinafter, an image processing device according to the preferred embodiment of the present invention will be described with reference to Figures 1A and 1B. As shown, the image processing device according to the preferred embodiment of the present invention includes a light path refraction plate 10 arranged in front of a charge coupled device 4 (see Figure 5) for refracting and projecting an incident ray from an object to the charge coupled device, a supporting plate 20 for supporting the light path refraction plate 10, and a driving section for driving the light path refraction plate 10.

The supporting plate 20 is made of an elastic material of a predetermined elasticity, and includes a frame 22, and first and second holders 24 and 26. The frame 22 supports the light path refraction plate 10, the first holder 24 rotatably supports the frame 22 in a first direction (longitudinal direction in the drawing), and the second holder 26 rotatably supports the first holder 24 in a second direction (horizontal direction in the drawing). The first and second holders 24 and 26, and the frame 22 and the first holder 24 are connected with each other by first and second connecting sections 27 and 28, respectively. The frame 22, the first and second holders 24 and 26, and the first and second connecting sections 27 and 28 are integrally formed by a press.

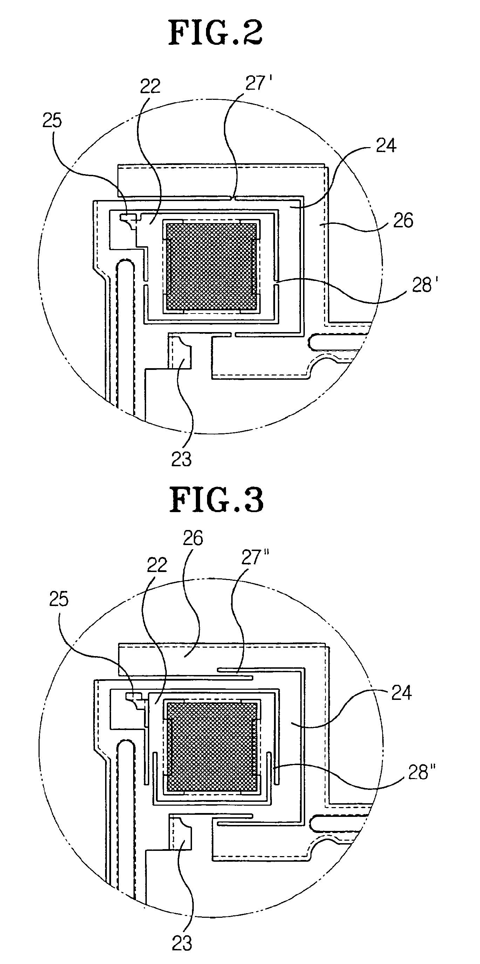

As shown in the drawings, the first and second connecting sections 27 and 28 have U-shapes, and are formed in a perpendicular relation with respect to the respective rotational axis of the first holder 24 and the frame 22. Meanwhile, Figures 2 and 3 show another example of the supporting plate 20 of the image processing device according to the present invention. In Figure 2, the first and second connecting sections 27' and 28' are formed in a parallel relation with respect to the respective rotational axis of the first holder 24 and the frame 22. Further, in Figure 3, the first and second connecting sections 27" and 28" are formed in a perpendicular relation with respect to the first holder 24 and the frame 22, while having I-shapes, not U-shapes. The shape of the connecting sections may be modified properly considering the modulus of elasticity according to the material of the supporting plate 20.

The driving section includes a first bimorphemic piezo 30a for rotating the first holder 24 in the second direction, a second bimorphemic piezo 30b for rotating the frame in the first direction, and a driving circuit for applying driving signals to the first and second bimorphemic piezos 30a and 30b.

The first and second bimorphemic piezos 30a and 30b are fixed on the end of the second holder 26 and on the end of the first holder 24, respectively, in a perpendicular relation with each other. Other ends of the first and second bimorphemic piezos 30a and 30b are in contact with first and second operational pieces 23 and 25 of the first holder 24 and the frame 22, respectively.

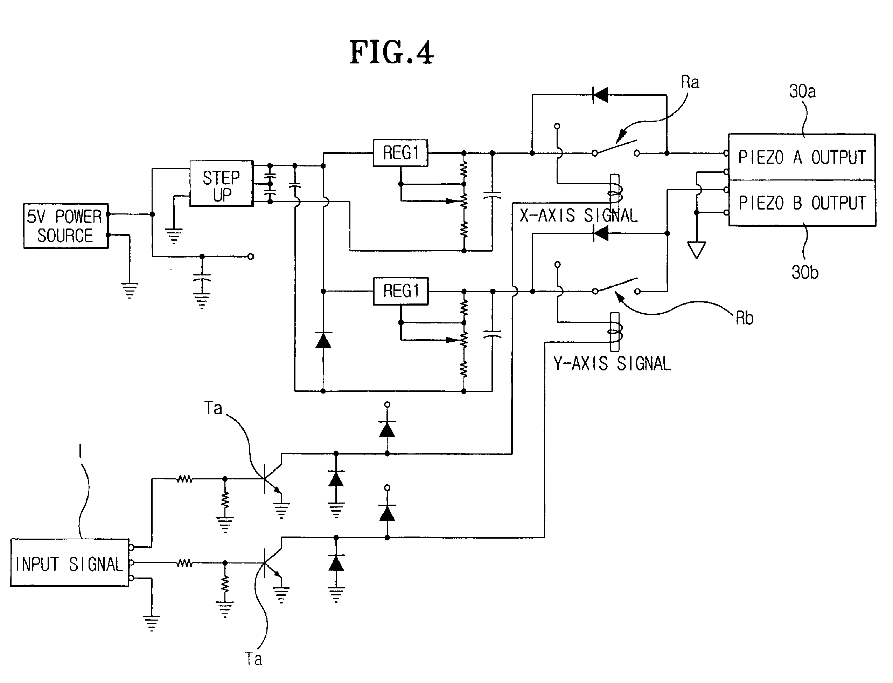

The driving circuit for applying the driving signals to the bimorphemic piezos 30a and 30b is shown in Figure 4.

According to the operation signal inputted through an input terminal I, transistors Ta and Tb are turned on or off. According to the on/off status of the transistors Ta and Tb, relays Ra and Rb are turned on or off. Accordingly, electricity is applied to the bimorphemic piezo 30a or 30b which is connected with the turned on relay Ra or Rb, and the bimorphemic piezo 30a or 30b is driven.

As shown in Figure 5, the image processing device according to the preferred embodiment of the present invention is disposed in front of the charge coupled device 4 of the camera.

In the camera employing the image processing device according to the present invention, the incident ray of the image of the object through an optical system 1 is projected to the charge coupled device 4 via an iris diaphragm 3, and an image processing device 9.

When the operation signal is applied from the driving circuit, end(s) of the first and/or the second bimorphemic piezo(s) 30a and/or 30b is (are) curved. Accordingly, the first and/or second operation piece(s) 23 and/or 25 in contact with the end(s) of the first and/or second bimorphemic piezo(s) 30a and/or 30b is (are) moved, the first holder 24 and/or the frame 22 is (are) rotated on the first and/or second connecting section(s) 27 and/or 28. When the first holder 24 and/or the frame 22 is (are) rotated, the light path refraction plate 10 supported on the frame 10 is rotated in the first and/or the second direction(s) in a predetermined angular range. If the bimorphemic piezo 30a is driven, the light path refraction plate 10 is rotated in the first direction by the first holder 24, while the light path refraction plate 10 is rotated in the second direction by the frame 22 when the second bimorphemic piezo 30b is driven. When both of the first and second bimorphemic piezos 30a and 30b are driven, the light path refraction plate 10 is rotated in both of the first and second directions.

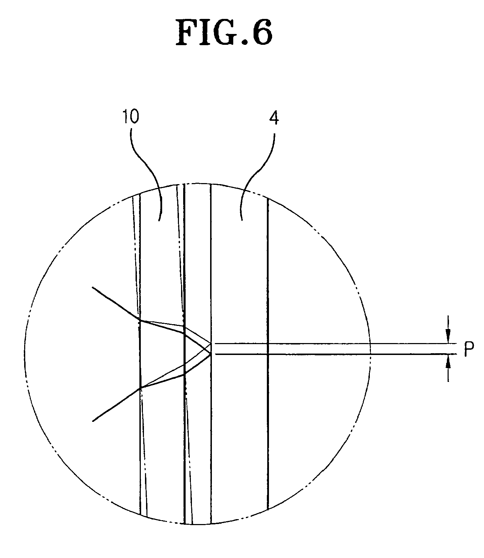

When the light path refraction plate 10 is rotated, as shown in Figure 6, the incident ray to the charge coupled device 4 is refracted by the light path refraction plate 10. Accordingly, the positions of the lights projected to the charge coupled device 4 are shifted by a predetermined distance (p). Here, it is preferable that the predetermined angular range of the rotation of the light path refraction plate 10 is the refraction distance of the ray by the light path refraction plate 10 is a half pitch of one pixel when the light path refraction plate 10 is rotated to the maximum extent.

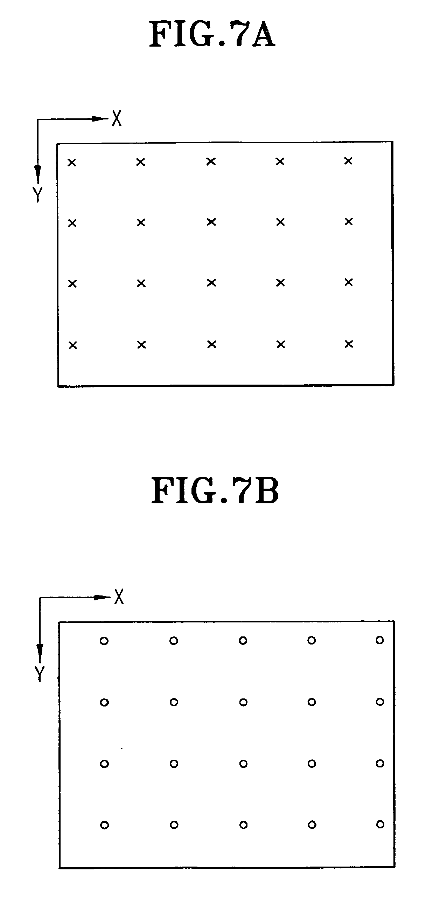

Figures 7A to 7D show the example of the image which is projected to the charge coupled device 4 through the light path refraction plate 10 of the image processing device constructed as above.

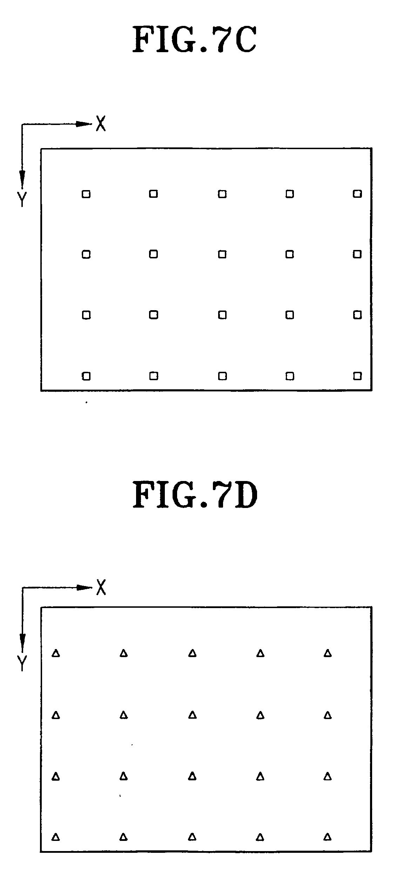

Figure 7A shows the image being projected to the charge coupled device 4 when the light path refraction plate 10 is in its initial position. Then as the light path refraction plate 10 is rotated in the first direction, the image of the object is shifted by a half pitch in an X-direction shown in Figure 7B. Then, as the light path refraction plate 10 is rotated in the second direction, the image of the object is shifted by a half pitch in an Y-direction as shown in Figure 7C. When the light path refraction plate 10 is reverse rotated in the first direction, the image of object is shifted by a minus half pitch in an X-direction as shown in Figure 7D. Finally, when the light path refraction plate 10 is reversely rotated in the second direction, the image of the object is shifted by a minus half pitch in the Y-direction, i.e., the image is returned to the initial position.

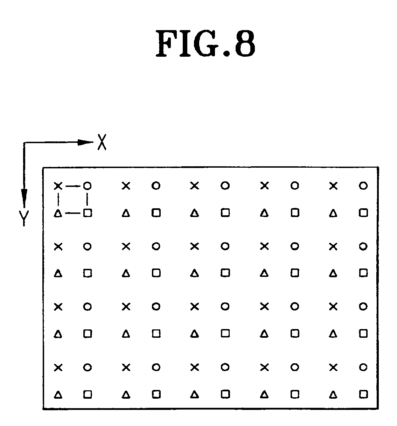

By the above processes, the images of the object on the respective positions as shown in Figures 7A to 7D are obtained, and composited to the finalized image as shown in Figure 8. The image shifting distance by the rotation of the light path refraction plate 10 corresponds to the half pitch of the charge coupled device 4, and the lights of the respective images occupy a quarter of one pixel. Accordingly, by compositing four images, one finalized image is obtained, and this finalized image has a resolution which is four times higher than the resolution of the charge coupled device 4.

As described above, according to the present invention, one light path refraction plate is supported by the supporting plate to be rotated in two directions, and is rotated by a pair of bimorphemic piezos in two directions. Accordingly, by having a simpler structure and reduced volume, the assembly and operation procedures become simplified. As a result, a camera employing the solid state charge coupled device can be compact sized.

As stated above, the preferred embodiment of the present invention is shown and described. Although the preferred embodiment of the present invention has been described, it is understood that the present invention should not be limited to this preferred embodiment but various changes and modifications can be made by one skilled in the art within the scope of the present invention as hereinafter claimed.

## Claims

1. A light path refraction plate supporting plate (20) comprising:
a frame (22) for supporting a light path refraction plate (10) for refracting and projecting an incident ray from an object to a charge coupled device (4);
a first holder (24) for rotatably supporting the frame in a first direction;
a second holder (26) for rotatably supporting the first holder (24) in a second direction which is in perpendicular relation with respect to the first direction;
a first connecting section (27) for connecting the first and second holders (24,26); and
a second connecting section (28) for connecting the frame (22) and the first holder (24);
wherein the frame (22), the first holder (24), the second holder (26), the first connecting section (27), and the second connecting section (28) are made of elastic material and are integrally formed.

2. The plate as claimed in claim 1, wherein the frame (22), the first holder (24), the second holder (26), the first connecting section (27), and the second connecting section (28) are made of elastic material and are formed by a press.

3. The plate as claimed in claim 1 or 2, wherein the first and second connecting sections (27,28) are in parallel relation with respect to respective rotational axis thereof.

4. The plate as claimed in claim 1 or 2, wherein the first and second connecting sections (27,28) are in the perpendicular relation with respect to respective rotational axis thereof.

5. The plate as claimed in any of claims 1 to 4,
wherein the first and second connecting sections (27,28) are in the shape of the letter U.

6. The plate as claimed in any of claims 1 to 4,
wherein the first and second connecting sections (27,28) are in the shape of the letter I.

7. An image processing device comprising:
a light path refraction plate (10) disposed in front of a charge coupled device (4), for refracting and projecting an incident ray from an object to the charge coupled device;
a light path refraction plate supporting plate (20) as claimed in any preceding claim;
a first actuator (30a) for rotating the first holder (24) in the second direction, thereby successively projecting respective lights of an image of the object to a predetermined number of places in respective pixels of the charge coupled device; and
a second actuator (30b) for rotating the frame in the first direction, thereby successively projecting respective lights of the image of the object to a predetermined number of places in respective pixels of the charge coupled device.

8. The image processing device as claimed in claim 7,
wherein the first and second actuators (30a,30b) are bimorphemic piezos, and are in contact with the first holder (24) and the frame (22) by first and second operational pieces (23,25).

## Patentansprüche

1. Lichtwegbrechungsplatte tragende Platte (20), umfassend:
einen Rahmen (22) zum Tragen einer Lichtwegbrechungsplatte (10) zum Brechen und Projizieren eines einfallenden Strahls von einem Objekt zu einem ladungsgekoppelten Bauelement (4);
einen ersten Halter (24) zum drehbaren Tragen des Rahmens in einer ersten Richtung;
einen zweiten Halter (26) zum drehbaren Tragen des ersten Halters (24) in einer zweiten Richtung, die in senkrechter Beziehung zur ersten Richtung steht;
einen ersten Verbindungsabschnitt (27) zum Verbinden des ersten und zweiten Halters (24, 26); und
einen zweiten Verbindungsabschnitt (28) zum Verbinden des Rahmens (22) und des ersten Halters (24);
wobei der Rahmen (22), der erste Halter (24), der zweite Halter (26), der erste Verbindungsabschnitt (27) und der zweite Verbindungsabschnitt (28) aus elastischem Material hergestellt und integral ausgebildet sind.

2. Platte nach Anspruch 1, wobei der Rahmen (22), der erste Halter (24), der zweite Halter (26), der erste Verbindungsabschnitt (27) und der zweite Verbindungsabschnitt (28) aus elastischem Material hergestellt und von einer Presse ausgebildet sind.

3. Platte nach Anspruch 1 oder 2, wobei der erste und zweite Verbindungsabschnitt (27, 28) in paralleler Beziehung zur jeweiligen Drehachse davon stehen.

4. Platte nach Anspruch 1 oder 2, wobei der erste und zweite Verbindungsabschnitt (27, 28) in senkrechter Beziehung zur jeweiligen Drehachse davon stehen.

5. Platte nach einem der Ansprüche 1 bis 4, wobei der erste und zweite Verbindungsabschnitt (27, 28) die Gestalt des Buchstabens U aufweisen.

6. Platte nach einem der Ansprüche 1 bis 4, wobei der erste und zweite Verbindungsabschnitt (27, 28) die Gestalt des Buchstabens I aufweisen.

7. Bildverarbeitungseinrichtung, umfassend:
eine Lichtwegbrechungsplatte (10), die vor einem ladungsgekoppelten Baustein (4) angeordnet ist, zum Brechen und Projizieren eines einfallenden Strahls von einem Objekt zum ladungsgekoppelten Baustein;
eine Lichtwegbrechungsplatte tragende Platte (20) nach einem vorhergehenden Anspruch;
einen ersten Stellantrieb (30a) zum Drehen des ersten Halters (24) in die zweite Richtung, wodurch nacheinander jeweilige Lichter eines Bilds des Objekts zu einer vorbestimmten Anzahl von Stellen in jeweiligen Pixeln des ladungsgekoppelten Bausteins projiziert werden; und
einen zweiten Stellantrieb (30b) zum Drehen des Rahmens in die erste Richtung, wodurch nacheinander jeweilige Lichter des Bilds des Objekts zu einer vorbestimmten Anzahl von Stellen in jeweiligen Pixeln des ladungsgekoppelten Bausteins projiziert werden.

8. Bildverarbeitungseinrichtung nach Anspruch 7,
wobei der erste und zweite Stellantrieb (30a, 30b) bimorphematische Piezoelemente sind und durch ein erstes und zweites Betriebsstück (23, 25) mit dem ersten Halter (24) und dem Rahmen (22) in Kontakt stehen.

## Revendications

1. Plaque (20) de support d'une lame de réfraction d'un trajet lumineux, comprenant :
un châssis (22) destiné à supporter une lame (10) de réfraction d'un trajet lumineux pour réfracter et
projeter un rayon incident provenant d'un objet vers un dispositif à couplage de charge (4) ;
un premier support (24) pour supporter de façon rotative le châssis dans une première direction ;
un second support (26) pour supporter de façon rotative le premier élément de maintien (24) dans une seconde direction qui présente une relation de perpendicularité par rapport à la première direction ;
une première section de raccordement (27) pour raccorder les premier et second supports (24, 26) ; et
une seconde section de raccordement (28) pour raccorder le châssis et le premier support (24) ; dans lequel le châssis (22), le support (24), le second support (26), la première section de raccordement (27) et la seconde section de raccordement (28) sont faits d'un matériau élastique et sont formés de façon solidaire.

2. Plaque selon la revendication 1, dans laquelle le châssis (22), le premier support (24), le second support (26), la première section de raccordement (27) et la seconde section de raccordement (28) sont faits d'un matériau élastique et sont formés par une presse.

3. Plaque selon la revendication 1 ou 2, dans laquelle les première et seconde sections de raccordement (27, 28) présentant une relation de parallélisme par rapport à leur axe de rotation respectif.

4. Plaque selon la revendication 1 ou 2, dans laquelle les première et seconde sections de raccordement (27, 28) présentant une relation de perpendicularité par rapport à leur axe de rotation respectif.

5. Plaque selon l'une quelconque des revendications 1 à 4, dans laquelle les première et seconde sections de raccordement (27, 28) présentent la forme de la lettre U.

6. Plaque selon l'une quelconque des revendications 1 à 4, dans laquelle les première et seconde sections de raccordement (27, 28) présentent la forme de la lettre I.

7. Dispositif de traitement d'images, comprenant :
une lame (10) de réfraction d'un trajet lumineux disposée en face d'un dispositif à couplage de charge (4), pour réfracter et projeter un rayon incident provenant d'un objet vers le dispositif à couplage de charge ;
une plaque (20) supportant une lame de réfraction d'un trajet lumineux selon l'une quelconque des revendications précédentes ;
un premier actionneur (30a) destiné à faire tourner le premier support (24) dans la seconde direction, pour ainsi projeter successivement des lumières respectives d'une image de l'objet vers un nombre prédéterminé d'emplacements dans des pixels respectifs du dispositif à couplage de charge ; et
un second actionneur (30b) destiné à faire tourner le châssis dans la première direction, pour ainsi projeter successivement des lumières respectives de l'image de l'objet vers un nombre prédéterminé d'emplacements dans des pixels respectifs du dispositif à couplage de charge.

8. Dispositif de traitement d'images selon la revendication 7, dans lequel les premier et second actionneurs (30a, 30b) sont des éléments piézoélectriques bimorphes, et sont en contact avec le premier support (24) et avec le châssis (22) par l'intermédiaire de première et seconde pièces de commande (23, 25).
